# DEMANDE DE BREVET EUROPEEN

(11) **EP 2 201 869 A1**
(43) Date de publication de la demande: **30.06.2010**
(21) Numéro de dépôt: 08306024.4
(22) Date de dépôt: 29.12.2008
(51) Int. Cl.: A47H 5/06, B60J 5/06, B60J 7/06, E04H 4/08, F16H 25/00

(54) **Dispositif d'entrainement en translation et ensemble comprenant le dispositif et le rideau**

(71) Demandeur: Queirel, Jöel, Gibraltar (GI)
(72) Inventeur: Queirel, Jöel, Gibraltar (GI)
(74) Mandataire: Cabinet Plasseraud

(57) **Abrégé**

Dispositif d'entrainement (1) en translation comprenant :
- une tige d'entrainement (12) s'étendant suivant une direction longitudinale (X), ladite tige d'entrainement comportant une surface extérieure (14) cylindrique de section circulaire et une rainure (16) formant un creux par rapport à la surface extérieure cylindrique,
- un support (22) s'étendant étroitement autour de la tige d'entraînement (22) pour maintenir la tige d'entrainement (22) radialement à la direction longitudinale (X), ledit support (22) comportant une surface intérieure (24) cylindrique disposée à proximité immédiate de la surface extérieure (14) de la tige d'entrainement pour guider la tige d'entrainement (12) et une fente (26) s'étendant suivant la direction longitudinale (X),
- un coulisseau (32) s'étendant à travers la fente (26) et présentant une partie d'entrainement (34) s'étendant dans la rainure (16) et adapté pour coopérer avec la tige d'entrainement (12).

## Description

L'invention concerne un dispositif d'entrainement en translation, en particulier pour le déploiement et le repliement d'un rideau ou d'une bâche, ou pour le convoyage.

Un tel dispositif d'entrainement est destiné à servir notamment pour déplacer des rideaux ou des voilages présentant une grande longueur ou sur lesquels s'appliquent des efforts importants, tels que des rideaux de grandes dimensions pendant sous le dispositif d'entrainement, notamment afin de former un écran visuel devant une grande fenêtre ou sur une scène de théâtre, ou de constituer une séparation amovible dans une pièce. Un tel dispositif peut également être utilisé pour déplacer un rideau s'étendant horizontalement, tel qu'un rideau de protection de piscine. Il peut également servir à déplacer une bâche pour couvrir le dessus et les côtés d'un wagon ferroviaire ou d'un camion. Ce dispositif permet en outre de déplacer des objets sur une grande distance.

Conformément à l'invention, le dispositif d'entrainement comprend :
- une tige d'entrainement s'étendant suivant une direction longitudinale, ladite tige d'entrainement comportant une surface extérieure cylindrique de section circulaire et une rainure formant un creux par rapport à la surface extérieure cylindrique,
- un support s'étendant étroitement autour de la tige d'entrainement pour maintenir la tige d'entrainement radialement à la direction longitudinale, ledit support comportant une surface intérieure cylindrique disposée à proximité immédiate de la surface extérieure de la tige d'entrainement pour guider la tige d'entrainement et une fente s'étendant suivant la direction longitudinale,
- un coulisseau s'étendant à travers la fente et présentant une partie d'entrainement s'étendant dans la rainure et adapté pour coopérer avec la tige d'entrainement.

Ainsi, le mouvement de rotation de la tige est transformé en translation du coulisseau et les efforts s'appliquant radialement à la direction longitudinale sur la tige d'entrainement sont efficacement supportés par le support. Ledit support peut être maintenu au besoin sur le sol ou sur un bâti en différents endroits suivant la direction longitudinale sans entraver le fonctionnement du dispositif d'entrainement.

L'invention est particulièrement avantageuse dans le cas où la tige présente une longueur supérieure à 3 mètres et de préférence supérieure à 5 mètres.

Selon une autre caractéristique conforme à l'invention, de préférence la surface intérieure cylindrique du support est de section circulaire et se raccorde à la fente en s'écartant progressivement de la surface extérieure de la tige d'entrainement, sans former d'arrête vive.

Ainsi, on réduit le risque que le support, à la jonction de la surface extérieure et de la fente, endommage la tige d'entrainement.

Selon une autre caractéristique conforme à l'invention, la tige d'entrainement est de préférence guidée radialement à la direction longitudinale uniquement par contact entre la surface extérieure cylindrique de la tige d'entrainement et la surface intérieure du support.

Le dispositif est ainsi simplifié, ce qui engendre une réduction du nombre de pièces et du coût.

Selon une caractéristique complémentaire, le support présente de préférence une saillie par rapport à sa surface intérieure s'opposant au déplacement de la tige d'entrainement par rapport à la surface intérieure du support suivant la direction longitudinale.

La tige d'entrainement est ainsi arrêtée suivant la direction longitudinale par rapport au support de manière simple.

Selon une autre caractéristique conforme à l'invention, la partie d'entrainement du coulisseau comprend de préférence une portion de spire s'étendant dans la rainure de la tige d'entrainement.

Ainsi, l'effort d'entrainement suivant la direction longitudinale induit par la rotation de la tige d'entrainement s'applique sur une surface relativement grande et les efforts appliqués par le rideau sur le coulisseau radialement à la direction longitudinale sont supportés directement ou via la tige d'entrainement par le support.

Selon une caractéristique complémentaire conforme à l'invention, de préférence la partie d'entrainement du coulisseau comprend une pluralité de portions de spire s'étendant dans la rainure de la tige d'entrainement et solidarisées entre elles.

On augmente ainsi encore les efforts que le dispositif d'entrainement est apte à supporter.

Selon une autre caractéristique conforme à l'invention, la partie d'entrainement du coulisseau comprend de préférence au moins une spire complète s'étendant dans la rainure de la tige d'entrainement.

On s'assure ainsi que la partie d'entrainement du coulisseau est bien maintenue sur toute la périphérie de la tige d'entrainement et on transmet à la tige d'entrainement les efforts s'appliquant sur le coulisseau perpendiculairement à la direction longitudinale.

Selon une autre caractéristique conforme à l'invention, de préférence la rainure présente un pas et la partie d'entrainement du coulisseau comprend une succession d'éléments d'entrainement s'étendant dans la rainure et décalés les uns par rapport aux autres suivant la direction longitudinale d'une distance égale à un nombre entier de pas.

Cette solution simple permet de répartir les efforts le long de la direction longitudinale et donc d'augmenter la résistance aux efforts du dispositif d'entrainement.

Selon une autre caractéristique conforme à l'invention, de préférence le coulisseau comprend :
- une partie de jonction s'étendant à travers la fente, radialement à la direction longitudinale, suivant une direction transversale,
- une partie de retenue s'étendant à l'extérieur de la surface intérieure du support, la partie de retenue étant reliée à la partie d'entrainement par ladite partie de jonction et venant en appui suivant la direction transversale sur une surface de butée solidaire du support et adaptée pour empêcher le coulisseau de s'écarter de la vis d'entrainement.

Au moins une partie des efforts s'appliquant sur le coulisseau radialement à la direction longitudinale n'est pas supportée directement par la surface intérieure du support. La résistance du dispositif d'entrainement est ainsi encore accrue.

De préférence, le dispositif d'entrainement présente en outre les caractéristiques suivantes :
- le coulisseau comprend une base montée coulissante suivante la direction d'allongement par rapport au support,
- la partie d'entrainement est mobile par rapport à la base entre une position engagée dans laquelle elle s'étend dans la rainure et une position dégagée dans laquelle dans laquelle elle est à l'écart de la rainure.

Le dispositif d'entrainement constitue ainsi un moyen simple et robuste de convoyer des éléments.

Selon une caractéristique complémentaire conforme à l'invention, le coulisseau comprend en outre de préférence un dispositif de débrayage apte à amener la partie d'entrainement en position dégagée lorsque le coulisseau arrive en butée.

Ainsi, le coulisseau peut être arrêté dans une position déterminée ou dans le cas où le dispositif d'entrainement comprend plusieurs coulisseaux, la tige d'entrainement peut être entraînée en rotation sans que tous les coulisseaux soient entraînés en translation suivant la direction longitudinale.

De manière encore complémentaire, de préférence le dispositif d'entrainement comprend :
- une première rainure hélicoïdale présentant un premier pas et une deuxième rainure hélicoïdale présentant un deuxième pas différent du premier pas,
- une première partie d'entrainement adaptée pour coopérer uniquement avec la première rainure hélicoïdale,
- une deuxième partie d'entrainement adaptée pour coopérer uniquement avec la deuxième rainure hélicoïdale.

Ainsi, si les deux rainures s'enroulent dans le même sens suivant la direction longitudinale et que l'amplitude du pas de la première rainure est différent de l'amplitude du pas de la deuxième rainure, le coulisseau peut être entraîné à deux vitesses différentes sans modifier la vitesse de rotation de la tige d'entrainement. En outre, si les deux rainures s'enroulent en sens opposés suivant la direction longitudinale, le coulisseau peut être entraîné dans les deux sens suivant la direction longitudinale sans modifier le sens de rotation de la tige d'entrainement.

Selon une autre caractéristique conforme à l'invention, le coulisseau est de préférence absent de l'étroit espace s'étendant entre la tige d'entrainement et le support.

Ainsi, le coulisseau ne risque pas d'être coincé entre la tige d'entrainement et le support.

Selon une autre caractéristique conforme à l'invention, la tige d'entrainement comprend de préférence une pluralité de tronçons solidarisés entre eux.

Ainsi, la réalisation d'une tige d'entrainement de grande longueur est facilitée.

Selon une caractéristique complémentaire conforme à l'invention, de préférence la tige présente un alésage et le dispositif d'entrainement comprend en outre un noyau s'étendant dans l'alésage de deux tronçons de tige consécutifs.

L'assemblage entre les tronçons de tige d'entrainement est ainsi robuste.

Selon une autre caractéristique encore complémentaire conforme à l'invention, l'alésage de la tige est non-circulaire et le noyau présente une section complémentaire.

Ainsi le noyau transfère le mouvement de rotation d'un tronçon aux tronçons adjacents.

L'invention est tout particulièrement avantageuse pour un ensemble comprenant, outre le dispositif d'entrainement précité, un rideau.

Selon une autre caractéristique conforme à l'invention, de préférence la surface intérieure du support définit une cavité, le rideau est maintenu sur le coulisseau et présente un jonc s'étendant suivant la direction longitudinale, ledit jonc étant maintenu dans un logement disposé à l'extérieur de ladite cavité du support et solidaire du support.

Cette solution est simple et permet de réduire les efforts s'appliquant sur le support.

Selon encore une autre caractéristique conforme à l'invention, l'ensemble comprend de préférence deux dispositifs d'entrainement entre lesquels le rideau est maintenu.

D'autres caractéristiques et avantages de la présente invention apparaîtront dans la description détaillée suivante, se référant aux dessins annexés dans lesquels :
- la figure 1 illustre schématiquement un ensemble conforme à l'invention monté sur un véhicule,
- la figure 2 illustre en vue transversale un premier mode de réalisation d'un ensemble conforme à l'invention,
- la figure 3 illustre le premier mode de réalisation en perspective partielle,
- la figure 4 illustre partiellement le premier mode de réalisation en perspective éclatée,
- la figure 5 illustre à échelle agrandie une partie de la figure 4,
- la figure 6 illustre à échelle agrandie la zone repérée VI à la figure 2,
- la figure 7 est une vue partielle en coupe suivant la ligne repérée VII-VII à la figure 2,
- la figure 8 illustre en vue transversale un deuxième mode de réalisation d'un ensemble conforme à l'invention,
- la figure 9 illustre partiellement le deuxième mode de réalisation en perspective,
- la figure 10 illustre à échelle agrandie la zone repérée X à la figure 8,
- la figure 11 illustre schématiquement un troisième mode de réalisation d'un ensemble conforme à l'invention,
- la figure 12 illustre en vue transversale le troisième mode de réalisation,
- la figure 13 illustre partiellement le troisième mode de réalisation en perspective,
- la figure 14 illustre schématiquement un quatrième mode de réalisation d'un ensemble conforme à l'invention implanté dans une piscine,
- la figure 15 illustre en vue transversale le quatrième mode de réalisation,
- la figure 16 illustre partiellement le quatrième mode de réalisation en perspective,
- la figure 17 illustre partiellement une variante du quatrième mode de réalisation en perspective,
- la figure 18 illustre schématiquement un cinquième mode de réalisation d'un ensemble conforme à l'invention implanté dans un dispositif de convoyage,
- la figure 19 illustre partiellement le quatrième mode de réalisation en perspective,
- la figure 20 est illustre à échelle agrandie la zone repérée XX à la figure 19,
- la figure 21 illustre en vue transversale le cinquième mode de réalisation.

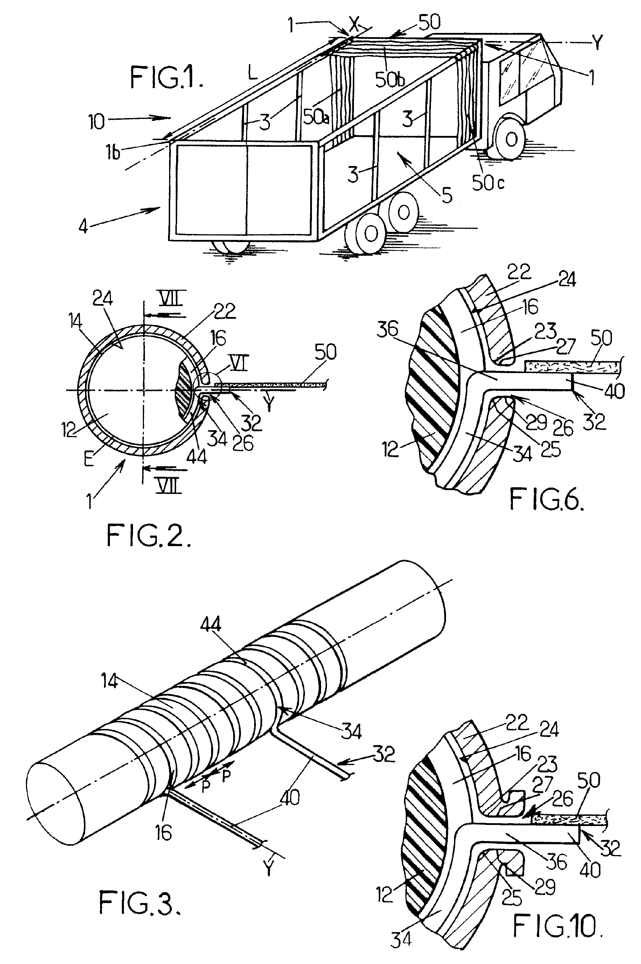

La figure 1 illustre un véhicule de transport 4 comprenant une zone de transport 5 protégée par un rideau 50. Le véhicule de transport 4 est plus précisément un camion. Le rideau 50 peut être replié dans une partie de la zone de transport 5, ici à l'avant, par exemple afin de faciliter le chargement ou être déplié afin de protéger toute la zone de transport 5.

Un dispositif d'entrainement 1 est disposé en partie supérieure de la zone de chargement 5, à chacune des extrémités latérales. Le rideau 50 comprend ainsi une partie 50a, 50b pendant sensiblement verticalement sous chacun des dispositifs d'entrainement 1 et une partie 50c sensiblement horizontale s'étendant entre les deux dispositifs d'entrainement 1. Les deux dispositifs d'entrainement 1 sont sensiblement identiques et, en les commandant de manière synchronisée, ils permettent de déplacer le bord arrière du rideau vers l'arrière du véhicule de transport en entrainant progressivement le reste du rideau et ainsi de protéger toute la zone de chargement, ou inversement de déplacer le bord arrière du rideau vers l'avant du véhicule de transport et de replier ainsi progressivement tout le rideau 50.

Chacun des dispositifs d'entrainement 1 s'étend suivant une direction longitudinale X entre une extrémité avant 1a et une extrémité arrière 1b sur une longueur L correspondant sensiblement dans ce premier mode de réalisation à la longueur de la zone de chargement 5. La longueur L est ici d'environ 5 à 10 mètres et pourrait au besoin atteindre plusieurs dizaines de mètres. Tel qu'illustré à la figure 1, chacun des dispositifs d'entrainement 1 est supporté par deux piliers intermédiaires 3 optionnels.

Tel qu'illustré plus en détail, aux figures 2 à 7 en relation avec le premier mode de réalisation, conformément à l'invention le dispositif d'entrainement 1 comprend essentiellement une tige d'entrainement 12, un support 22 et un coulisseau 32.

La tige d'entrainement 12 s'étend suivant la direction longitudinale X. Elle comporte une surface extérieure 14 cylindrique de section circulaire et une rainure hélicoïdale 16 formant un creux par rapport à la surface extérieure cylindrique 14. La rainure hélicoïdale 16 présente un pas p constant.

Le support 22 est constitué dans ce mode de réalisation par un tube fendu. Le tube support 22 s'étend suivant la direction longitudinale X autour de la tige d'entrainement 12. Il présente une surface intérieure 24 cylindrique et de section circulaire. La surface intérieure 24 s'étend étroitement en regard de la surface extérieure 14 de la tige d'entrainement en ménageant un espace E avantageusement de l'ordre d'1 millimètre en moyenne, et de préférence inférieur à 5 centièmes du diamètre de la tige d'entrainement 12. Le tube 12 est supporté sur la structure du camion 4 aux extrémités 1a, 1b, et en outre par les piliers intermédiaires 3 entre les extrémités 1a, 1b.

La tige d'entrainement 12 est maintenue radialement par rapport à la direction longitudinale X par le tube support 22. De préférence, le contact entre la surface intérieure 24 du tube support 22 et la surface extérieure 14 de la vis d'entrainement 12 constitue le seul maintien de la vis d'entrainement 12 radialement à la direction longitudinale X. Par conséquent, l'espace E ne présente pas une dimension constante radialement à la direction longitudinale X lorsque la direction longitudinale X n'est pas verticale, du fait de l'action de la pesanteur sur la tige d'entrainement 12. Bien que ce ne soit pas préférée, la tige d'entrainement 12 pourrait être montée pivotante sur des paliers distincts de la surface intérieure 14.

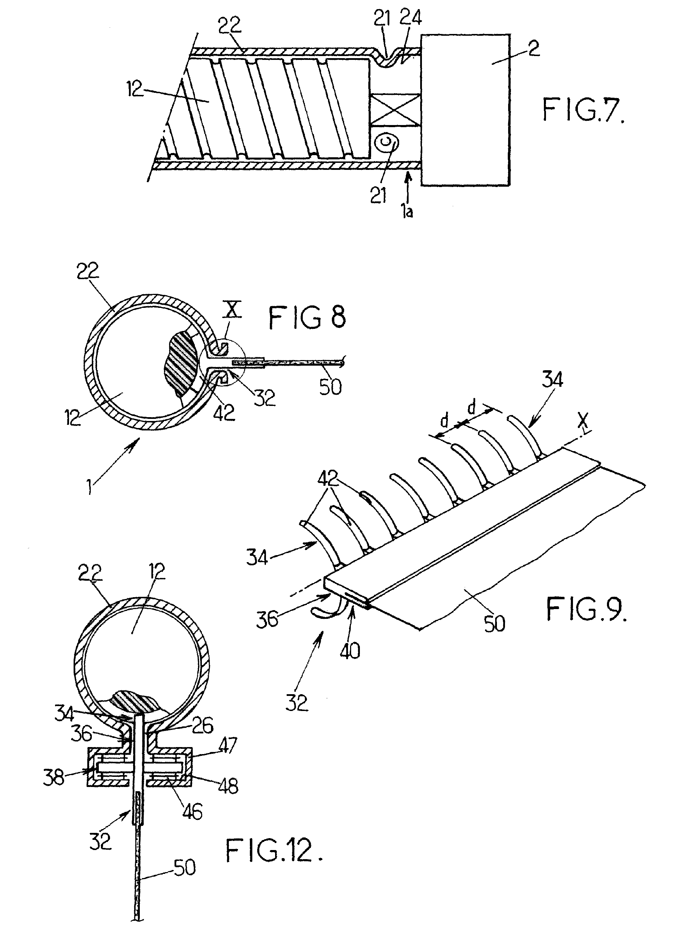

En outre, tel qu'illustré plus en détail à la figure 7, à chacune des extrémités 1a, 1b la tige d'entrainement 12 est retenue par rapport au tube support 22 suivant la direction longitudinale X par des plots 21 réalisés par déformation locale du tube support 22 et faisant saillie intérieurement par rapport à la surface intérieure 24 du tube support 22.

Un moteur électrique 2 engagé dans la tige d'entrainement 12 l'entraine en rotation autour de la direction d'allongement X.

Tel qu'illustré plus particulièrement à la figure 6, le tube support 22 présente une fente 26 s'étendant suivant la direction longitudinale X. La fente 26 est délimitée par deux surfaces 27, 29, de préférence sensiblement planes, s'étendant en regard l'une de l'autre et se raccordant chacune à la partie circulaire de la surface intérieure 24 du tube support 22 par une portion de raccordement courbe 23, 25. Ainsi, la surface intérieure 24 du tube support 22 s'écarte progressivement de la surface extérieure 14 de la tige d'entrainement 12.

Dans ce premier mode de réalisation, la fente 26 se présente sous la forme d'une entaille réalisée dans le tube support 22 dont les bords auraient été arrondis.

Tel qu'illustré plus particulièrement aux figures 2, 3 et 6, le coulisseau 32 présente une partie d'entrainement 34, une partie de jonction 36 et une partie de fixation 40. La partie de fixation 40 s'étend hors du tube support 22 et est fixée au rideau 50. La partie d'entrainement 34 s'étend à l'intérieur du tube support 22 et coopère avec tige d'entrainement 12. La partie de jonction 36 s'étend entre la partie d'entrainement 34 et la partie de fixation 40. La partie de jonction 36 s'étend à travers la fente 26, suivant une direction transversale Y, perpendiculaire à la direction longitudinale X.

Dans ce premier mode de réalisation, le coulisseau 32 se présente sous la forme d'une tige dont une partie médiane présente un enroulement hélicoïdal définissant une succession de spires (de préférence 3 à 8 spires) 44 s'étendant dans la rainure 16 de la tige d'entrainement et formant la partie d'entrainement 34. Le pas des spires est par conséquent égal au pas p de la rainure hélicoïdale 16. Les extrémités de la tige sont rectilignes et forment chacune la partie de jonction 36 et la partie de fixation 40.

Il sera noté que le diamètre de la tige formant la partie d'entrainement 34 est inférieur à la profondeur de la rainure 16 et que le diamètre extérieur des spires 44 de la partie d'entrainement 34 est inférieur au diamètre de la surface extérieure 14 de la tige d'entrainement 12. La partie d'entrainement 34 est par conséquent noyée dans la rainure 16 et donc absente de l'espace E entre la surface extérieure 14 de la tige d'entrainement 12 et la surface intérieure 24 du tube support 22.

Du fait que la partie d'entrainement 34 est enroulée autour de la tige d'entrainement 12, le coulisseau est retenu radialement à la direction longitudinale X par le tube support 22 via la tige d'entrainement 12.

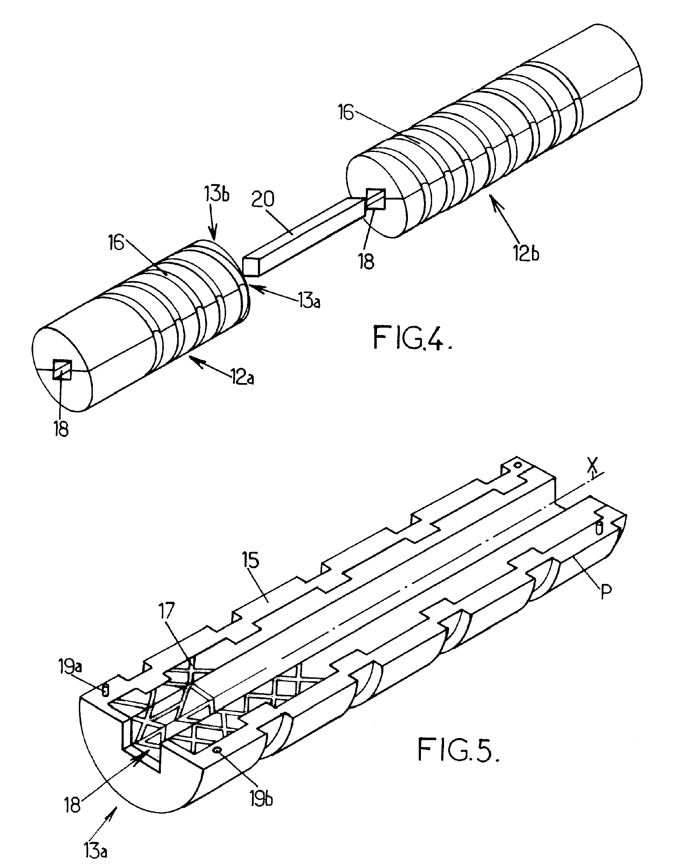

Par ailleurs, tel qu'illustré à la figure 4, la tige d'entrainement 12 est avantageusement constituée d'une succession de tronçons 12a, 12b d'une longueur comprise de préférence entre 20 centimètres et 1 mètre. Chaque tronçon 12a, 12b présente en son centre un alésage 18 cylindrique de section avantageusement non circulaire. Un noyau 20 cylindrique et de section complémentaire s'étend dans l'alésage de deux tronçons consécutifs 12a, 12b, afin de les solidariser entre eux. L'alésage 18 reçoit également une partie du moteur électrique 2, afin d'entrainer en rotation la tige d'entrainement 12.

Selon un autre aspect et tel qu'illustré plus particulièrement aux figures 2 et 3, la tige 12 est constituée de deux demi parties 13a, 13b sensiblement hémicylindriques et solidarisées ensemble. Chaque demi-partie 13a comprend une enveloppe 15 d'épaisseur sensiblement constante dans laquelle la rainure 16 est réalisée extérieurement. A l'intérieur de l'enveloppe 15 la demi-partie 13a est remplie de nervures entrecroisées 17 s'étendant perpendiculairement au plan de jonction P des deux demi-coquilles 13a, 13b. L'alésage 18 est constitué par un évidement dans la demi-coquille 13a. Des pions 19a et des trous 19b disposés sont disposés dans l'enveloppe 15, symétriquement par rapport à la direction longitudinale X, et de part et d'autre du plan de jonction P, afin de permettre aux pions 19a et aux trous 19b de deux demi-coquilles 19a, 19b de s'engager l'un dans l'autre.

Les demi-coquilles 13a, 13b sont avantageusement réalisées par injection. La matière de la tige d'entrainement 12 est de préférence un matériau thermoplastique, en particulier du polyéthylène (PE), du polyacétal (POM) ou du polyamide (PA). Le tube support 12 est de préférence réalisé par extrusion et constitué d'aluminium. Le coulisseau 32 est de préférence réalisé en métal ou en matériau plastique.

Le deuxième mode de réalisation illustré aux figures 8 à 10 se distingue essentiellement du premier mode de réalisation illustré aux figures 2 à 7 par la forme du coulisseau 32. Les parties du deuxième mode de réalisation de dispositif d'entrainement qui ne sont pas décrites par la suite sont identiques à celles du premier mode de réalisation. Dans ce deuxième mode de réalisation, le coulisseau 32 comprend toujours une partie d'entrainement 34, une partie de jonction 36 et une partie de fixation 40.

La figure 9 illustre en perspective le coulisseau 32 de manière isolé. Tel qu'illustré plus particulièrement à la figure 9, la partie d'entrainement 34 est constituée par une succession de portions de spires 42 (de préférence entre un quart et trois quarts de spire) non jointives. De préférence, la section des portions de spires 42 est inférieure à la profondeur des rainures 16. Les portions de spire 42 sont distantes les unes des autres suivant la direction longitudinale X d'une distance d correspondant à un nombre entier de fois (de préférence de 2 à 10 fois) le pas p de la vis d'entrainement 12.

La partie de jonction 36 et la partie de fixation 40 se présentent sensiblement sous la forme d'une plaque. La partie de jonction 36 solidarise les portions de spire 42. La partie de fixation 40 est maintenue sur le rideau 50 en englobant un bord du rideau 50. De préférence, le coulisseau 32 est moulé sur le bord du rideau 50 et réalisé en matériau thermoplastique.

Le coulisseau 32 est retenu suivant la direction transversale Y par rapport au tube support 32 dans un sens par le contact des portions de spire 42 avec le fond de la rainure 16 de la tige d'entrainement 12 et dans le sens opposé par le contact des portions de spire 42 avec la surface intérieure 24 du tube support 22. Toutefois, plus les portions de spire 42 représentent plus d'une demi-spire et entourent la tige d'entrainement 12, plus le contact des portions de spire 42 avec la surface intérieure 24 du tube support 22 est faible.

Par ailleurs et de manière dissocié de ce qui précède, tel qu'illustré plus particulièrement à la figure 10, le deuxième mode de réalisation du dispositif d'entrainement se distingue du premier mode de réalisation en ce que la fente 26 est constituée par le recourbement en forme de U des bords du tube support 22 s'étendant de part et d'autre de la fente 26. Les surface en regard 27, 29 sensiblement planes sont par conséquent plus étendues suivant la direction transversale Y et le tube support 22 est renforcé de part et d'autre de la fente 26.

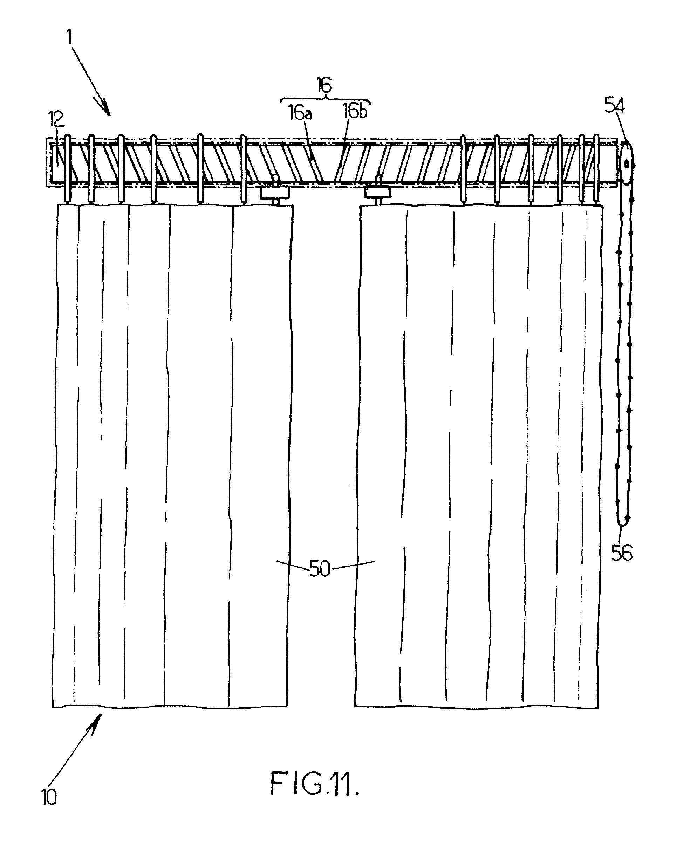

Les figures 11 à 13 illustrent un ensemble 10 comprenant essentiellement un troisième mode de réalisation de dispositif d'entrainement 1 et deux pans de rideau 50. Les parties du troisième mode de réalisation de dispositif d'entrainement qui ne sont pas décrites par la suite peuvent être identiques à celles du premier ou du deuxième mode de réalisation.

Le dispositif d'entrainement 1 comprend essentiellement le tube support 22 (non représenté à la figure 11 pour une meilleure vision), la tige d'entrainement 12 et deux coulisseaux 32.

La rainure 16 de la tige d'entrainement comprend deux parties successives 16a, 16b de pas opposés, afin de permettre l'écartement ou le rapprochement des pans de rideau 50 suspendus au tube support 22.

La tige d'entrainement 12 est entrainée en rotation via une roue dentée 54 solidaire de la tige d'entrainement 12 par l'action d'un utilisateur sur une cordelette 56. En variante, la tige d'entrainement pourrait être entrainée en rotation par le moteur 2, comme décrit précédemment.

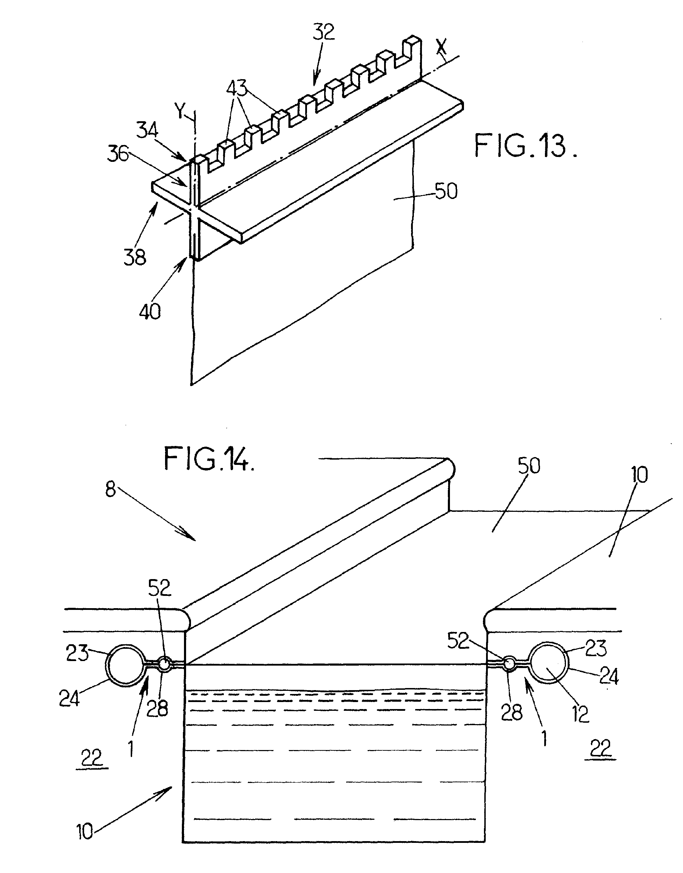

Tel qu'illustré en particulier aux figures 12 et 13, le coulisseau 32 comprend une partie de retenue 38 entre la partie de jonction 36 et la partie de fixation 40. La partie d'entrainement 34 comprend une succession de dents 43 de section sensiblement constante engagées dans la rainure 16 et distantes les unes des autres suivant la direction longitudinale X d'une distance correspondant à un nombre entier de pas p. La partie de jonction 36 et la partie de fixation 40 forment une plaque s'étendant suivant la direction transversale Y, dans le prolongement de laquelle s'étendent les dents 43. La partie de jonction 36 solidarise les dents 43 entre elles. La partie de fixation 40 est maintenue sur le rideau 50 en englobant un bord du rideau 50.

La partie de retenue 38 se présente sous forme d'une plaque d'appui s'étendant suivant la direction longitudinale X et perpendiculairement à la direction transversale Y. La partie de retenue 38 est guidée dans un coffrage 47 disposé à l'extérieur du tube support 22 et solidaire du tube support 22. Le coffrage 47 présente une surface d'appui 48 s'étendant de part et d'autre de la partie de retenue 38. Des patins de roulement, de préférence des patins à aiguilles, sont interposés entre la surface de retenue 38 du coulisseau 32 et la surface d'appui 48 du coffrage 47.

Le coulisseau est ainsi retenue suivant la direction transversale Y par appui bilatéral de la partie d'appui 38 sur la surface d'appui 48.

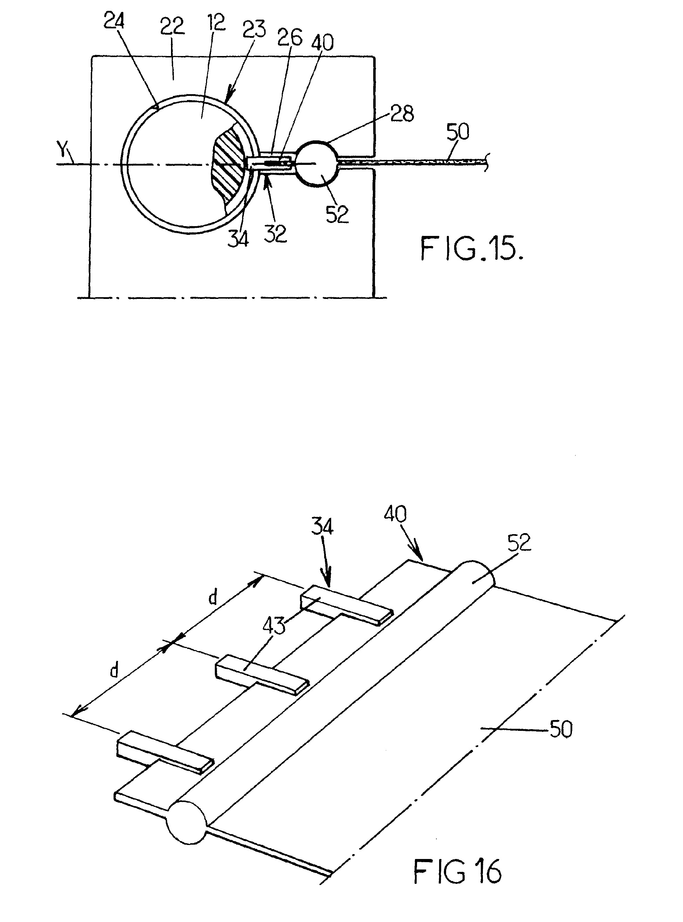

Les figures 14 et 15 illustrent un ensemble 10 implanté dans une piscine 8 et comprenant essentiellement deux dispositifs d'entrainement 1 selon un quatrième mode de réalisation, un rideau 50 s'étendant entre les deux dispositifs d'entrainement 10. Les parties du quatrième mode de réalisation de dispositif d'entrainement qui ne sont pas décrites par la suite peuvent être identiques à celles des trois premiers modes de réalisation.

Pour chacun des dispositifs d'entrainement 1, le support 22 présente une cavité 23 délimitée par la surface intérieure 24 et dans laquelle est reçue la tige d'entrainement 12. Le support 22 présente en outre un logement 28 cylindrique s'étendant suivant la direction longitudinale X. Le logement 28 communique avec la cavité 23 par la fente 26 s'étendant entre la cavité 23 et le logement 28 suivant la direction transversale Y.

Le coulisseau 32 comprend une succession de dents 43 discrètes, distantes les unes des autres, et décalées de la distance d suivant la direction longitudinale X. Les dents 43 comprennent la partie d'entrainement 34 coopérant avec la rainure 16 de la tige d'entrainement 12. Les dents 43 sont moulées sur le bord du rideau 50 qu'elles englobent dans la partie de fixation 40 s'étendant dans la fente 26.

Le rideau 50 comprend un jonc 52 s'étendant suivant la direction longitudinale X, à proximité des dents 43. Le jonc 52 et étroitement reçu dans le logement 28, de sorte que le jonc 52 ne peut que coulisser suivant la direction longitudinale X dans le logement 28.

Le coulisseau 32 est par conséquent retenu suivant la direction transversale Y dans un sens par le support 22 via la tige d'entrainement 12 et dans le sens opposé par le support 22 via le jonc 52.

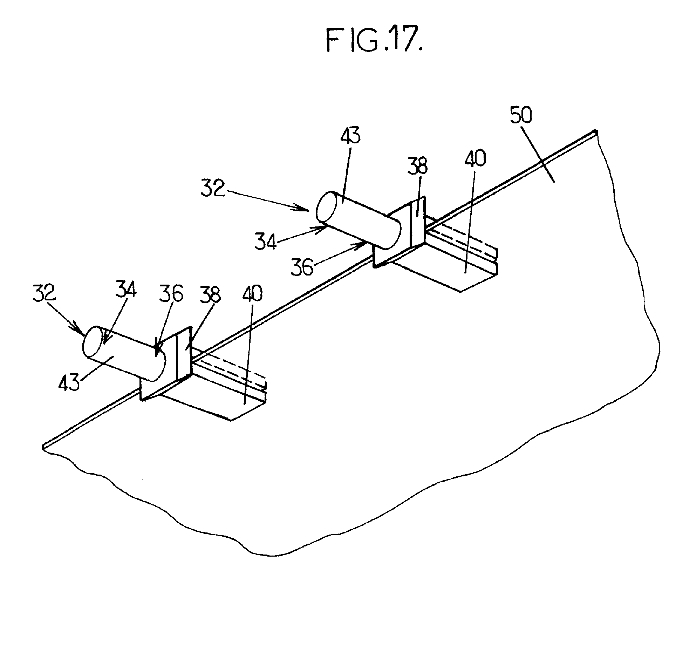

La figure 17 illustre le coulisseau 32 une variante du quatrième mode de réalisation du dispositif d'entrainement 1, dans lequel le rideau 50 est dépourvu de jonc le coulisseau 32 comprend la portion de jonction 36 entre la portion d'entrainement 34 et la portion de fixation 40 suivant la direction transversale Y. La portion de jonction 36 s'étend dans la fente 26 et la portion de retenue 38 est étroitement reçue dans le logement 28.

Ainsi, le coulisseau 32 est retenu suivant la direction transversale Y par la coopération de la partie de retenue 38 et le logement 28.

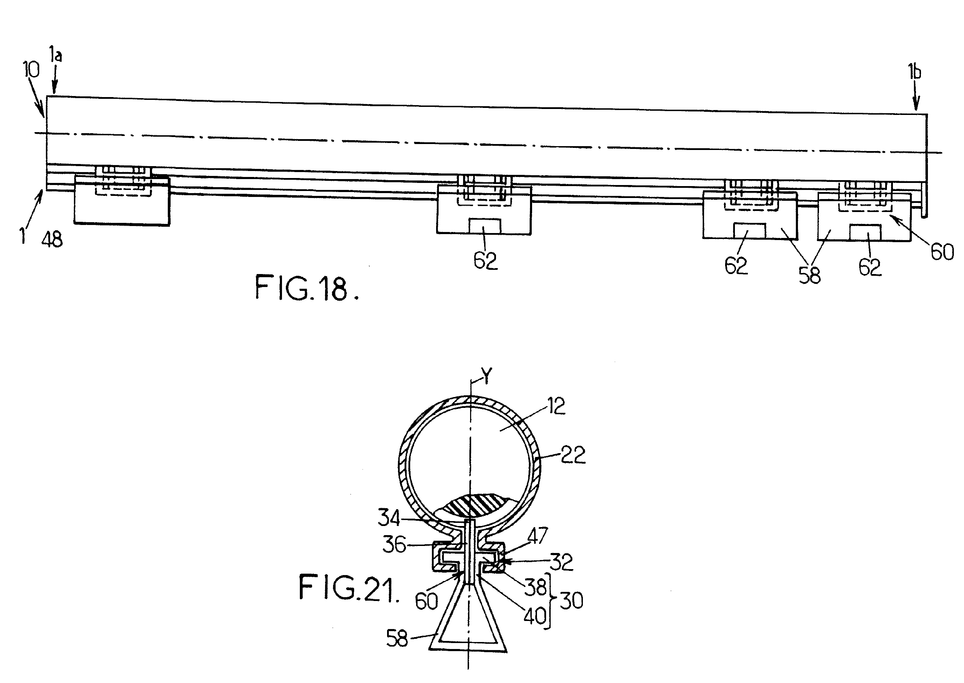

Les figures 18 à 20 illustrent un ensemble 10 comprenant essentiellement un dispositif d'entrainement 1 selon un cinquième mode de réalisation, une pluralité de chariots 58 et de dispositifs de débrayage 60, 70 associés à ces chariots 58. Les parties du cinquième mode de réalisation de dispositif d'entrainement qui ne sont pas décrites par la suite peuvent être identiques à celles des quatre premiers modes de réalisation.

L'ensemble 10 constitue un ensemble de convoyage permettant de déplacer des chariots 58 portant des pièces 62 entre les deux extrémités 1a, 1b.

La tige d'entrainement 12 comprend une première rainure 16a hélicoïdale et une deuxième rainure 16b hélicoïdale s'étendant toute deux sur toute la longueur de la vis d'entrainement 12. La première rainure 16a présente un pas Pa strictement inférieur au pas Pb de la deuxième rainure 16b. En outre, dans le mode de réalisation illustré, la première rainure 16a et la deuxième rainure 16b s'enroulent en sens opposés suivant la direction longitudinale X.

Le dispositif d'entrainement 1 comprend essentiellement la tige d'entrainement 12, le tube support 22 et une pluralité de coulisseaux 32.

Chacun des coulisseaux 32 comprend une première partie d'entrainement 34a, une deuxième partie d'entrainement 34b, une première partie de jonction 36a, une deuxième partie de jonction 36b, une partie de retenue 38 et une partie de fixation 40.

La partie de retenue 38 se présente sous forme d'une plaque s'étendant perpendiculairement à la direction transversale Y et adaptée pour coulisser suivant la direction longitudinale X dans un coffrage 47. Le coffrage 47 est disposé à l'extérieur du tube support 22 et solidaire du tube support 22. La partie de retenue 38 vient en appui sur une surface intérieure d'appui 48 du coffrage 47 par l'intermédiaire de patins de roulement 46.

Le chariot 58 est fixé à la partie de retenue 38 par l'intermédiaire de la partie de fixation 40. Les parties de jonction 36a, 36b s'étendent dans la fente 26 s'étendant entre le coffrage 47 et le tube support 22.

Le chariot 58, la partie de fixation 40 et la partie de retenue 38 sont solidaires et constitue une base 30 du coulisseau 32, montée coulissante suivant la direction longitudinale X par rapport au tube support 22.

La première partie d'entrainement 34a et la première partie de jonction 36a constituent un premier ensemble d'accouplement 72 mobile par rapport à la base 30 suivant la direction transversale Y entre une position avancée et une position reculée.

La deuxième partie d'entrainement 34b et la deuxième partie de jonction 36b constituent un deuxième ensemble d'accouplement 74 mobile par rapport à la base 30 suivant la direction transversale Y entre une position avancée et une position reculée.

La première partie de jonction 36a et le deuxième partie de jonction 36b se présentent sous forme d'un U comprenant deux branches traversant la partie de retenue 38. Les branches du U de la première partie de jonction 36a sont décalées suivant la direction longitudinale X d'une distance correspondant à un nombre entier de fois le pas Pa de la première rainure 16a. Les branches du U de la deuxième partie de jonction 36b sont décalées suivant la direction longitudinale X d'une distance correspondant à un nombre entier de fois le pas Pb de la deuxième rainure 16b. Dans le mode de réalisation illustré lesdites distances sont égales respectivement au pas Pa de la première rainure 16a et au pas Pb de la deuxième rainure Pb.

Chacune des branches de la première partie de jonction 36a et de la deuxième partie de jonction 36b portent à leur extrémité une dent 43 sollicitée par un ressort 45. Les deux dents 43 portées par la première portion de jonction 36a constituent la première partie d'entrainement 34a et les deux dents 43 portées par la deuxième portion de jonction 36b constituent la deuxième partie d'entrainement 34b.

Le premier ensemble d'accouplement 72 et le deuxième dispositif d'accouplement 74 sont maintenus de manière libérable dans leur position avancée et dans leur position reculée au moyen d'une bille 64 sollicitée par un ressort 66 s'engageant dans des rainures 68 correspondant à la position avancée et la position reculée.

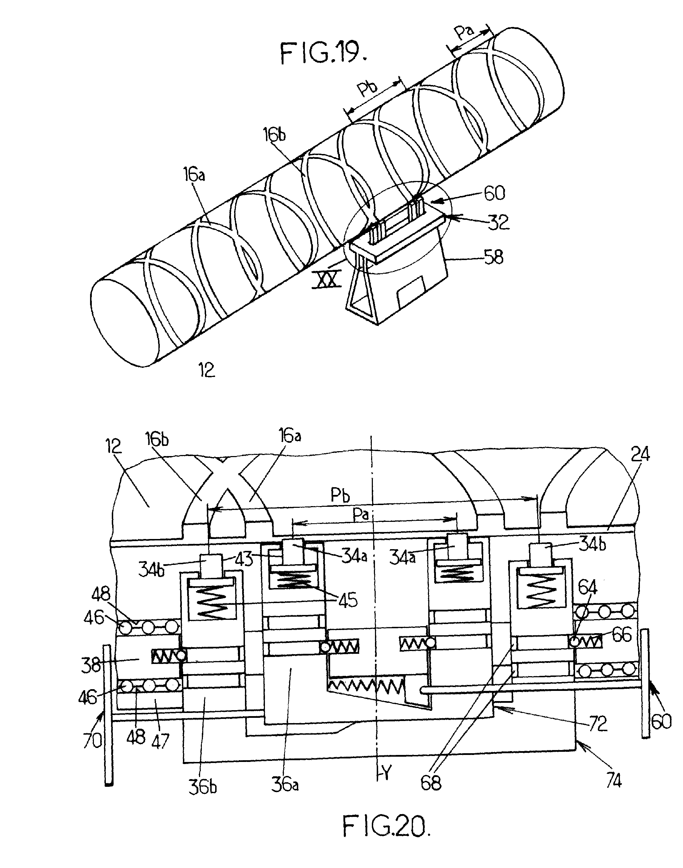

Lorsque le premier ensemble d'accouplement 72 est en position avancée, tel qu'illustré à la figure 20, l'engagement des dents 43 de la première partie d'accouplement 34a dans la première rainure 16a est initié. Toutefois, jusqu'à temps que les dents 43 de la première partie d'accouplement 34a soient en regard de la première rainure 16a, elles sont en appui contre la surface extérieure 14 de la vis d'entrainement 12 et les ressorts 45 sont comprimés. Lorsque la première rainure 16a arrive en regard des dents 43 de la première partie d'accouplement 34a, sous la pression du ressort 45 la première partie d'accouplement 34a se déplace suivant la direction transversale Y vers une position engagée dans la rainure 16a.

Un dispositif de débrayage 60 comprenant une tige 76, un coin 78 et un ressort 80 ramène automatiquement le premier ensemble d'accouplement 72 en position reculée lorsque le chariot 58 arrive en butée, en fin de course, contre un autre chariot ou dans une position déterminée par une butée. La première partie d'accouplement 34a est alors dégagée de la première rainure 16a.

Le deuxième ensemble d'accouplement 74 est représenté en position reculée à la figure 20. L'engagement de la deuxième partie d'entrainement 34b dans la rainure 16b s'effectue de manière correspondant à ce qui a été décrit précédemment en relation avec le premier ensemble d'accouplement 72 et la première partie d'entrainement 34a. Un dispositif de débrayage 80 analogue au dispositif de débrayage 60 ramène la deuxième partie d'entrainement 34b en position dégagée.

Du fait que le décalage entre les dents 43 de la première partie d'entrainement 34a suivant la direction longitudinale X n'est pas égal à un nombre entier de fois le pas Pb de la deuxième rainure 16b, en liant le déplacement des deux dents 43 de la première partie d'entrainement 34a suivant la direction transversale (par des moyens annexes non représentés) on empêche la première partie d'entrainement 34a de s'engager dans la deuxième rainure 16b. Il en est de même pour l'engagement de la deuxième partie d'entrainement 34b dans la première rainure 16a.

Bien entendu, l'invention n'est nullement limitée aux modes de réalisation illustrés, décrits à titres illustratifs non limitatifs. Par exemple, bien que cela ne soit pas préféré, on pourrait retirer les ressorts 45 et fixer les parties d'entrainement 34a, 34b sur les parties de jonction 36a, 36b correspondantes.

## Revendications

1. Dispositif d'entrainement (1) en translation comprenant :
- une tige d'entrainement (12) s'étendant suivant une direction longitudinale (X), ladite tige d'entrainement comportant une surface extérieure (14) cylindrique de section circulaire et une rainure (16) formant un creux par rapport à la surface extérieure cylindrique,
- un support (22) s'étendant étroitement autour de la tige d'entrainement (22) pour maintenir la tige d'entrainement (22) radialement à la direction longitudinale (X), ledit support (22) comportant une surface intérieure (24) cylindrique disposée à proximité immédiate de la surface extérieure (14) de la tige d'entrainement pour guider la tige d'entrainement (12) et une fente (26) s'étendant suivant la direction longitudinale (X),
- un coulisseau (32) s'étendant à travers la fente (26) et présentant une partie d'entrainement (34) s'étendant dans la rainure (16) et adapté pour coopérer avec la tige d'entrainement (12).

2. Dispositif d'entrainement selon la revendication 1, dans lequel la surface intérieure (24) cylindrique du support (22) est de section circulaire et se raccorde à la fente (26) en s'écartant progressivement de la surface extérieure (14) de la tige d'entrainement (12), sans former d'arrête vive.

3. Dispositif d'entrainement selon la revendication 1 ou la revendication 2, dans lequel la tige d'entrainement (12) est guidée radialement à la direction longitudinale (X) uniquement par contact entre la surface extérieure (14) cylindrique de la tige d'entrainement (12) et la surface intérieure (24) du support (22).

4. Dispositif d'entrainement selon la revendication précédente dans lequel le support (22) présente une saillie (21) par rapport à sa surface intérieure (24) s'opposant au déplacement de la tige d'entrainement (12) par rapport à la surface intérieure (24) du support (22) suivant la direction longitudinale (X).

5. Dispositif d'entrainement selon l'une quelconque des revendications précédentes, dans lequel la partie d'entrainement (34) du coulisseau comprend une portion de spire (42) s'étendant dans la rainure (16) de la tige d'entrainement.

6. Dispositif d'entrainement selon la revendication précédente, dans laquelle la partie d'entrainement (34) du coulisseau comprend une pluralité de portions de spire (42) s'étendant dans la rainure (16) de la tige d'entrainement et solidarisées entre elles.

7. Dispositif d'entrainement selon l'une quelconque des revendications 1 à 4, dans lequel la partie d'entrainement (34) du coulisseau comprend au moins une spire complète (44) s'étendant dans la rainure (16) de la tige d'entrainement.

8. Dispositif d'entrainement selon l'une quelconque des revendications précédentes, dans lequel la rainure (16) présente un pas (p) et la partie d'entrainement (34) du coulisseau comprend une succession d'éléments d'entrainement (42, 43) s'étendant dans la rainure et décalés les uns par rapport aux autres suivant la direction longitudinale (X) d'une distance (d) égale à un nombre entier de pas (p).

9. Dispositif d'entrainement selon l'une quelconque des revendications précédentes, dans lequel le coulisseau (32) comprend :
- une partie de jonction (36) s'étendant à travers la fente (26), radialement à la direction longitudinale (X), suivant une direction transversale (Y),
- une partie de retenue (38) s'étendant à l'extérieur de la surface intérieure (24) du support (22), la partie de retenue (38) étant reliée à la partie d'entrainement (34) par ladite partie de jonction (36) et venant en appui suivant la direction transversale (Y) sur une surface d'appui (48) solidaire du support (22) et adaptée pour empêcher le coulisseau (32) de s'écarter de la vis d'entrainement (12).

10. Dispositif d'entrainement selon l'une quelconque des revendications précédentes dans lequel :
- le coulisseau (32) comprend une base (30) montée coulissante suivante la direction d'allongement (X) par rapport au support (22),
- la partie d'entrainement (34a, 34b) est mobile par rapport à la base (30) entre une position engagée dans laquelle elle s'étend dans la rainure (16) et une position dégagée dans laquelle dans laquelle elle est à l'écart de la rainure (16).

11. Dispositif d'entrainement selon la revendication précédente dans laquelle le coulisseau comprend en outre un dispositif de débrayage (60) apte à amener la partie d'entrainement (34a, 34b) en position dégagée lorsque le coulisseau (32) arrive en butée.

12. Dispositif d'entrainement selon l'une quelconque des revendications 9 ou 10, comprenant :
- une première rainure hélicoïdale (16a) présentant un premier pas (Pa) et une deuxième rainure hélicoïdale (16b) présentant un deuxième pas (Pb) différent du premier pas (Pa),
- une première partie d'entrainement (34a) adaptée pour coopérer uniquement avec la première rainure hélicoïdale (16a),
- une deuxième partie d'entrainement (34b) adaptée pour coopérer uniquement avec la deuxième rainure hélicoïdale (16b).

13. Dispositif d'entrainement selon l'une quelconque des revendications précédentes dans lequel le coulisseau (22) est absent de l'étroit espace (E) s'étendant entre la tige d'entrainement (12) et le support (22).

14. Dispositif d'entrainement selon l'une quelconque des revendications précédentes, dans lequel la tige d'entrainement (12) comprend une pluralité de tronçons (12a, 12b) solidarisés entre eux.

15. Dispositif d'entrainement selon la revendication précédente, dans lequel la tige présente un alésage (18) et le dispositif d'entrainement (1) comprend en outre un noyau (20) s'étendant dans l'alésage (18) de deux tronçons (12a, 12b) de tige consécutifs.

16. Dispositif d'entrainement selon la revendication précédente dans lequel l'alésage (18) de la tige est non-circulaire et le noyau (20) présente une section complémentaire.

17. Ensemble (10) comprenant un rideau (50) et un dispositif d'entrainement (1) selon l'une quelconque des revendications précédentes.

18. Ensemble selon la revendication précédente, dans lequel la surface intérieure (24) du support (22) définit une cavité (23), le rideau (50) est maintenu sur le coulisseau (22) et présente un jonc (52) s'étendant suivant la direction longitudinale (X), ledit jonc (52) étant maintenu dans un logement (28) disposé à l'extérieur de ladite cavité (23) du support (22) et solidaire du support.

19. Ensemble selon l'une quelconque des revendications 17 ou 18, comprenant deux dispositifs d'entrainement (1) selon l'une quelconque des revendications 1 à 16 entre lesquels le rideau (50) est maintenu.

## Revendications modifiées

### Revendications modifiées conformément à la règle 137(2) CBE.

**1.** Dispositif d'entrainement (1) en translation comprenant :
- une tige d'entrainement (12) s'étendant suivant une direction longitudinale (X), ladite tige d'entrainement comportant une surface extérieure (14) cylindrique de section circulaire et une rainure (16) formant un creux par rapport à la surface extérieure cylindrique,
- un support (22) pour maintenir la tige d'entrainement (12) radialement, ledit support (12) comportant une surface intérieure (24) cylindrique et une fente (26) s'étendant suivant la direction longitudinale (X), et
- un coulisseau (32) s'étendant à travers la fente (26) et présentant une partie d'entrainement (34) s'étendant dans la rainure (16) et adapté pour coopérer avec la tige d'entrainement (12),
ledit dispositif d'entrainement étant **caractérisé en ce que** ledit support (22) s'étend étroitement autour de la tige d'entrainement (22), la surface intérieure (24) cylindrique étend disposée à proximité immédiate de la surface extérieure (14) de la tige d'entrainement pour guider la tige d'entrainement (12).

**2.** Dispositif d'entrainement selon la revendication 1, dans lequel la surface intérieure (24) cylindrique du support (22) est de section circulaire et se raccorde à la fente (26) en s'écartant progressivement de la surface extérieure (14) de la tige d'entrainement (12), sans former d'arrête vive.

**3.** Dispositif d'entrainement selon la revendication 1 ou la revendication 2, dans lequel la tige d'entrainement (12) est guidée radialement à la direction longitudinale (X) uniquement par contact entre la surface extérieure (14) cylindrique de la tige d'entrainement (12) et la surface intérieure (24) du support (22).

**4.** Dispositif d'entrainement selon la revendication précédente dans lequel le support (22) présente une saillie (21) par rapport à sa surface intérieure (24) s'opposant au déplacement de la tige d'entrainement (12) par rapport à la surface intérieure (24) du support (22) suivant la direction longitudinale (X).

**5.** Dispositif d'entrainement selon l'une quelconque des revendications précédentes, dans lequel la partie d'entrainement (34) du coulisseau comprend une portion de spire (42) s'étendant dans la rainure (16) de la tige d'entrainement.

**6.** Dispositif d'entrainement selon la revendication précédente, dans laquelle la partie d'entrainement (34) du coulisseau comprend une pluralité de portions de spire (42) s'étendant dans la rainure (16) de la tige d'entrainement et solidarisées entre elles.

**7.** Dispositif d'entrainement selon l'une quelconque des revendications 1 à 4, dans lequel la partie d'entrainement (34) du coulisseau est constituée par au moins une spire complète (44) s'étendant dans la rainure (16) de la tige d'entrainement.

**8.** Dispositif d'entrainement selon l'une quelconque des revendications précédentes, dans lequel la rainure (16) présente un pas (p) et la partie d'entrainement (34) du coulisseau comprend une succession d'éléments d'entrainement (42, 43) s'étendant dans la rainure et décalés les uns par rapport aux autres suivant la direction longitudinale (X) d'une distance (d) égale à un nombre entier de pas (p).

**9.** Dispositif d'entrainement selon l'une quelconque des revendications précédentes, dans lequel le coulisseau (32) comprend :
- une partie de jonction (36) s'étendant à travers la fente (26), radialement à la direction longitudinale (X), suivant une direction transversale (Y),
- une partie de retenue (38) s'étendant à l'extérieur de la surface intérieure (24) du support (22), la partie de retenue (38) étant reliée à la partie d'entrainement (34) par ladite partie de jonction (36) et venant en appui suivant la direction transversale (Y) sur une surface d'appui (48) solidaire du support (22) et adaptée pour empêcher le coulisseau (32) de s'écarter de la vis d'entrainement (12).

**10.** Dispositif d'entrainement selon l'une quelconque des revendications précédentes dans lequel :
- le coulisseau (32) comprend une base (30) montée coulissante suivante la direction d'allongement (X) par rapport au support (22),
- la partie d'entrainement (34a, 34b) est mobile par rapport à la base (30) entre une position engagée dans laquelle elle s'étend dans la rainure (16) et une position dégagée dans laquelle dans laquelle elle est à l'écart de la rainure (16).

**11.** Dispositif d'entrainement selon la revendication précédente dans laquelle le coulisseau comprend en outre un dispositif de débrayage (60) apte à amener la partie d'entrainement (34a, 34b) en position dégagée lorsque le coulisseau (32) arrive en butée.

**12.** Dispositif d'entrainement selon l'une quelconque des revendications 9 ou 10, comprenant :
- une première rainure hélicoïdale (16a) présentant un premier pas (Pa) et une deuxième rainure hélicoïdale (16b) présentant un deuxième pas (Pb) différent du premier pas (Pa),
- une première partie d'entrainement (34a) adaptée pour coopérer uniquement avec la première rainure hélicoïdale (16a),
- une deuxième partie d'entrainement (34b) adaptée pour coopérer uniquement avec la deuxième rainure hélicoïdale (16b).

**13.** Dispositif d'entrainement selon l'une quelconque des revendications précédentes dans lequel le coulisseau (32) est absent de l'espace (E) s'étendant entre la tige d'entrainement (12) et le support (22).

**14.** Dispositif d'entrainement selon l'une quelconque des revendications précédentes, dans lequel la tige d'entrainement (12) comprend une pluralité de tronçons (12a, 12b) solidarisés entre eux.

**15.** Dispositif d'entrainement selon la revendication précédente, dans lequel la tige présente un alésage (18) et le dispositif d'entrainement (1) comprend en outre un noyau (20) s'étendant dans l'alésage (18) de deux tronçons (12a, 12b) de tige consécutifs.

**16.** Dispositif d'entrainement selon la revendication précédente dans lequel l'alésage (18) de la tige est non-circulaire et le noyau (20) présente une section complémentaire.

**17.** Ensemble (10) comprenant un rideau (50) et un dispositif d'entrainement (1) selon l'une quelconque des revendications précédentes.

**18.** Ensemble selon la revendication précédente, dans lequel la surface intérieure (24) du support (22) définit une cavité (23), le rideau (50) est maintenu sur le coulisseau (32) et présente un jonc (52) s'étendant suivant la direction longitudinale (X), ledit jonc (52) étant maintenu dans un logement (28) disposé à l'extérieur de ladite cavité (23) du support (22) et solidaire du support.

**19.** Ensemble selon l'une quelconque des revendications 17 ou 18, comprenant deux dispositifs d'entrainement (1) selon l'une quelconque des revendications 1 à 16 entre lesquels le rideau (50) est maintenu.
